# EUROPÄISCHE PATENTSCHRIFT

(11) **EP 0 916 083 B1**
(45) Veröffentlichungstag und Bekanntmachung des Hinweises auf die Patenterteilung: **31.10.2001**
(21) Anmeldenummer: 97933691.4
(22) Anmeldetag: 21.07.1997
(51) Int. Cl.: G01N 7/18, G01N 17/00

(54) **VERFAHREN ZUR KORROSIONSÜBERWACHUNG**
CORROSION MONITORING PROCESS
PROCEDE POUR CONTROLER LA CORROSION

(30) Priorität: 02.08.1996 DE 19631178
(43) Veröffentlichungstag der Anmeldung: 19.05.1999
(73) Patentinhaber: Framatome ANP GmbH, 91058 Erlangen (DE)
(72) Erfinder: KOKEMÜLLER, Detlef, D-91074 Herzogenaurach (DE); ADLOFF, Margit, D-90592 Schwarzenbruck (DE); BITTER, Konrad, D-91074 Herzogenaurach (DE)
(74) Vertreter: Mörtel & Höfner
(86) Internationale Anmeldenummer: EP9703931
(87) Internationale Veröffentlichungsnummer: WO9805940

(56) Entgegenhaltungen:
- EP-A- 0 531 149
- US-A- 4 124 408
- US-A- 4 137 047
- C. JACKLIN : "DISSOLVED HYDROGEN ANALYZER-- A TOOL FOR BOILER CORROSION STUDIES" MATERIALS PROTECTION AND PERFORMANCE, Bd. 10, Nr. 5, Mai 1971, Seiten 39-44, XP002044291
- PATENT ABSTRACTS OF JAPAN vol. 13, no. 457 (C-644), 16.Oktober 1989 & JP 01 176081 A (ISHIKAWAJIMA HARIMA HEAVY IND. CO. LTD.), 12.Juli 1989,

## Beschreibung

Die Erfindung betrifft ein Verfahren zur Korrosionsüberwachung von C-Stahl eines Behälters, insbesondere eines Dampferzeugers, während der Reinigung des Behälters mit mindestens einer Chemikalie, die bei der Reinigung ein Gas, insbesondere Stickstoff, freisetzt.

Bei der Reinigung von Behältern, die z.B. Dampferzeuger in einem Kernkraftwerk sind, sollen Ablagerungen durch Chemikalien aufgelöst werden. Diese Ablagerungen bestehen häufig aus Magnetit. Geeignete Chemikalien greifen, nachdem die Ablagerungen entfernt sind, das Material des Behälters an. Haufig dringen die Chemikalien noch bevor der Behälter ausreichend gereinigt ist, an einzelnen Stellen bereits bis zum Behältermaterial vor und greifen es an. Dabei wird Wasserstoff freigesetzt.

Es sind bereits diverse Verfahren vorgeschlagen worden, um einen Angriff der Chemikalien auf den Stahl des Behälters zu erkennen, unter anderem Messung des Korrosionswasserstoffes oder elektrochemische Messungen (siehe C. Jacklin et al.:"Dissolved Hydrogen Analyser - A Tool for Bailer Corrosion Studies", Materials protection and Performance, Bd. 10, Nr. 5, Mai 1971, Seiten 39-44).
Mit dem bekannten Verfahren kann jedoch nicht festgestellt werden wie weit die Reinigung insgesamt fortgeschritten ist. Falls nur an einem relativ kleinen Teil der Behälterinnenwand die Chemikalie den C-Stahl erreicht, wird bereits Wasserstoff freigesetzt, obwohl der größte Teil des Behälters noch nicht gereinigt ist, und noch z.B. mit Magnetit bedeckt ist.

Der Erfindung lag die Aufgabe zugrunde, ein Verfahren zur Korrosionsüberwachung anzugeben, mit dem nicht nur festgestellt wird, ob im Behälter ein Angriff auf das Behältermaterial erfolgt, sondern auch, ob die Reinigung genügend weit fortgeschritten ist.

Die Aufgabe wird gemäß der Erfindung dadurch gelöst, daß im bei der Reinigung sich bildenden Gas-Dampf-Gemisch das Volumen- oder Mengenverhältnis von Wasserstoff und dem freigesetzten Gas bestimmt und mit einem Grenzwert verglichen wird, und daß beim Überschreiten des Grenzwertes die Reinigung abgebrochen wird.

Das Volumen oder die Menge des bei der Reinigung freigesetzten Gases, das beispielsweise Stickstoff ist, geben einen Hinweis darauf, mit welcher Intensität der Reinigungsprozeß zur Zeit abläuft. Das Volumen oder die Menge des freigesetzten Wasserstoffs geben einen Hinweis darauf, mit welcher Intensität z.Zt. ein Angriff auf das Metall des Behälters erfolgt. Das Verhältnis der beiden Volumina oder Mengen ermöglicht daher eine Aussage darüber, ob der Nutzen des Reinigungsprozesses größer als der Nachteil durch den Metallangriff ist oder nicht. Ein Grenzwert für das Verhältnis der Volumina oder Mengen von Wasserstoff und dem freigesetzten Gas, das z.B. Stickstoff ist, kann so ausgewählt werden, daß bei einem Überschreiten dieses Grenzwertes der Nachteil größer als der Nutzen der Reinigung ist. Folglich wird die Reinigung bei Überschreiten dieses Grenzwertes abgebrochen.

Mit dem Verfahren nach der Erfindung wird der Vorteil erzielt, daß die Reinigung trotz einsetzenden geringfügigen Metallangriffs bis zu einem optimalen Zeitpunkt weitergeführt wird.

Die bei der Reinigung eingesetzte Chemikalie ist beispielsweise ein Komplexbildner, der z.B. NH₃-EDTA und Hydrazin umfaßt.

Zum Messen von Wasserstoff und dem freigesetzten Gas wird Gas-Dampf-Gemisch aus dem Behalter beispielsweise über eine Leitung einem oder mehreren Meßgeraten zugeleitet. Diese Meßgeräte können ein Meßgerät für Wasserstoff und ein Meßgerät für das freigesetzte Gas, z.B. Stickstoff, sein. Damit ist eine ständige Messung der freigesetzten Volumina oder Mengen möglich, so daß auch ständig das Verhältnis von Wasserstoff und freigesetztem Gas bestimmt und mit dem Grenzwert verglichen werden kann.

Beispielsweise werden die Anteile von Wasserstoff und dem freigesetzten Gas (z.B. Stickstoff) im Gas-Dampf-Gemisch mit einem Gaschromatographen gemessen. Damit erzielt man eine hohe Meßgenauigkeit.

Der Grenzwert für das Volumen- oder Mengenverhältnis von Wasserstoff und freigesetztem Gas (z.B. Stickstoff), bei dessen Überschreiten die Reinigung abgebrochen wird, liegt beispielsweise zwischen 1 und 2. Ein besonders geeigneter Grenzwert ist 1,4.

Mit dem Verfahren nach der Erfindung wird insbesondere der Vorteil erzielt, daß durch das Überwachen des Verhältnisses von Wasserstoff und dem bei der Reinigung freigesetzten Gas (z.B. Stickstoff) erstmals ein Hinweis darauf möglich ist, ob der Nachteil durch einen Angriff der Chemikalien auf den C-Stahl des Behälters den Vorteil durch die weitere Reinigung (Magnetitauflösung) im Behälter überwiegt oder nicht.

Weiterhin kann durch Kalibrierung des Verfahrens sogar ermoglicht werden, daß die Metallangriffraten in µm/h überwacht werden können.

## Patentansprüche

1. Verfahren zur Korrosionsüberwachung von C-Stahl eines Behälters, insbesondere eines Dampferzeugers, während der Reinigung des Behälters mit mindestens einer Chemikalie, die bei der Reinigung ein Gas, insbesondere Stickstoff, freisetzt,
**dadurch gekennzeichnet, daß** im bei der Reinigung sich bildenden Gas-Dampf-Gemisch das Volumen- oder Mengenverhältnis von Wasserstoff und dem freigesetzten Gas bestimmt und mit einem Grenzwert verglichen wird, und daß beim Überschreiten des Grenzwertes die Reinigung abgebrochen wird.

2. Verfahren nach Anspruch 1,
**dadurch gekennzeichnet, daß** die Chemikalie ein Komplexbildner ist.

3. Verfahren nach Anspruch 2,
**dadurch gekennzeichnet, daß** die Chemikalie NH₃-EDTA und Hydrazin umfaßt.

4. Verfahren nach einem der Ansprüche 1 bis 3,
**dadurch gekennzeichnet, daß** das Gas-Dampf-Gemisch über eine Leitung einem oder mehreren Meßgeräten für Wasserstoff und für das freigesetzte Gas zugeleitet wird.

5. Verfahren nach einem der Ansprüche 1 bis 4,
**dadurch gekennzeichnet, daß** die Anteile von Wasserstoff und des freigesetzten Gases im Gas-Dampf-Gemisch mit einem Gaschromatographen gemessen werden.

6. Verfahren nach einem der Ansprüche 1 bis 5,
**dadurch gekennzeichnet, daß** der Grenzwert zwischen 1 und 2 liegt.

7. Verfahren nach Anspruch 6,
**dadurch gekennzeichnet, daß** der Grenzwert 1,4 ist.

8. Verfahren nach einem der Ansprüche 1 bis 7,
**dadurch gekennzeichnet, daß** durch Kalibrierung die Metallangriffsrate in µm/h überwacht wird.

## Claims

1. Method for monitoring the corrosion of C-steel of a vessel, in particular of a steam generator, while the vessel is being cleaned using at least one chemical which releases a gas, in particular nitrogen, during cleaning, **characterized in that** the volumetric ratio or quantitative ratio between hydrogen and the gas released is determined in the gas/vapour mixture which forms during the cleaning and this ratio is compared with a threshold value, and **characterized in that** the cleaning is interrupted in the event of the threshold value being exceeded.

2. Method according to Claim 1, **characterized in that** the chemical is a complexing agent.

3. Method according to Claim 2, **characterized in that** the chemical comprises NH₃-EDTA and hydrazine.

4. Method according to one of Claims 1 to 3,
**characterized in that** the gas/vapour mixture is fed, via a pipeline, to one or more units for measuring hydrogen and the gas released.

5. Method according to one of Claims 1 to 4,
**characterized in that** the levels of hydrogen and of the released gas in the gas/vapour mixture are measured using a gas chromatograph.

6. Method according to one of Claims 1 to 5,
**characterized in that** the threshold value lies between 1 and 2.

7. Method according to Claim 6, **characterized in that** the threshold value is 1.4.

8. Method according to one of Claims 1 to 7,
**characterized in that** the metal attack rate in µm/h is monitored by calibration.

## Revendications

1. Procédé de contrôle de la corrosion de l'acier au carbone d'une cuve notamment d'un générateur de vapeur, pendant le nettoyage de la cuve par au moins un produit chimique, qui, lors du nettoyage, dégage un gaz, notamment de l'azote, **caractérisé en ce qu'**il consiste à déterminer, dans le mélange de gaz et de vapeur se formant lors du nettoyage, le rapport en volume ou en quantité de l'hydrogène et du gaz dégagé et à le comparer à une valeur limite et à interrompre le nettoyage si la valeur limite est dépassée.

2. Procédé suivant la revendication 1, **caractérisé en ce que** le produit chimique est un agent complexant.

3. Procédé suivant la revendication 2, **caractérisé en ce que** le produit chimique comprend du NH₃-EDTA et de l'hydrazine.

4. Procédé suivant l'une des revendications 1 à 3, **caractérisé en ce qu'**il consiste à envoyer le mélange de gaz et de vapeur par un conduit à un appareil ou à plusieurs appareils de mesure de l'hydrogène et du gaz dégagé.

5. Procédé suivant l'une des revendications 1 à 4, **caractérisé en ce qu'**il consiste à mesurer les proportions d'hydrogène et de gaz dégagé dans le mélange de gaz et de vapeurs par un chromatographe en phase gazeuse.

6. Procédé suivant l'une des revendications 1 à 5, **caractérisé en ce que** la valeur limite est comprise entre 1 et 2.

7. Procédé suivant la revendication 6, **caractérisé en ce que** la valeur limite est de 1,4.

8. Procédé suivant l'une des revendications 1 à 7, **caractérisé en ce qu'**il consiste à contrôler par étalonnage la vitesse d'attaque du métal en µm/h.
